# EUROPEAN PATENT APPLICATION

(11) **EP 2 325 284 A1**
(43) Date of publication of application: **25.05.2011**
(21) Application number: 09252667.2
(22) Date of filing: 23.11.2009
(51) Int. Cl.: C10G 25/12, C10L 1/02, B01J 20/34

(54) **Method for regenerating an adsorbent**

(71) Applicant: BP OIL INTERNATIONAL LIMITED, Sunbury-on-Thames, Middlesex TW16 7BP (GB)
(72) Inventor: Clark, Alisdair Quentin, Reading, RG8 7QR (GB); Roberts, ian, Sunbury on Thames Middlesex, TW16 7EE (GB)
(74) Representative: Perkins, Nicholas David

(57) **Abstract**

A method of regenerating a solid adsorbent capable of adsorbing at least one fatty acid alkyl ester from a liquid hydrocarbon fuel composition which method comprises regenerating said adsorbent having at least one fatty acid alkyl ester adsorbed thereon by displacing at least a portion of said adsorbed fatty acid alkyl ester from said adsorbent by contacting said adsorbent with a liquid desorbant comprising at least one aromatic hydrocarbon and/or comprising at least one polar organic compound.

## Description

This invention relates to a method for regenerating adsorbents. In particular, this invention relates to a method of regenerating a solid adsorbent capable of adsorbing at least one fatty acid alkyl ester from liquid hydrocarbon fuel compositions for example, from jet fuel compositions.

Liquid hydrocarbon fuel compositions, for example jet fuel compositions, must meet many criteria before they are considered acceptable for use. Thus, jet fuel compositions must comprise hydrocarbons, which may be derived from mineral sources, for example from crude oil, shale oil, or tar sands, or from non-mineral sources, for example from Fischer Tropsch derived synthetic kerosine or biological sources, for example severely hydrotreated vegetable oils. Jet fuel compositions may comprise only specified additives within defined concentration limits and only 'trace' amounts of contaminants, for example sulphur and nitrogen, which may be linked to the method of manufacture. Chemical compounds outside these criteria are strictly not allowed in jet fuel compositions.

Liquid hydrocarbon fuel compositions other than jet fuel compositions may not be permitted to contain unacceptable concentrations of fatty acids alkyl esters. For example, marine fuel required to meet ISO 8217.

It may be desirable to reduce the amount of fatty acid alkyl ester contaminants in liquid hydrocarbon fuel compositions to reduce the risk of microbiological growths and/or contamination.

Liquid hydrocarbon fuel compositions including for example, jet fuel compositions, are transported to airport and storage facilities in various ways through distribution systems. Commercially, it is highly advantageous to distribute such liquid hydrocarbon fuel compositions, including jet fuel compositions, to airports and/or storage facilities using pipe-lines. These may be short, for example vessel to terminal, or cover some considerable distance from example, across many regions or counties. Such liquid hydrocarbon fuel compositions, including jet fuel compositions, are not the only compositions using such pipe-lines. Typically, gasoline, diesel and other hydrocarbon compositions may be transported through such pipelines. When transporting different fuel compositions through the same distribution system it is important to mitigate the risks of cross-contamination. One way of doing this for example, involves interfacing fuel compositions which are compatible with each other. Thus, it is common to transport diesel fuel compositions and jet fuel compositions using the same distribution system e.g. pipeline, vessels and the like, because these fuel compositions have compatible flash points.

There has been considerable interest in using bio-components in fuel compositions. Such bio-components are often oxygenates and may include for example, bio-derived fatty acid alkyl esters , for example fatty acid methyl esters (which are often called FAME's) and which may be used in diesel fuel compositions. Such oxygenate bio-components may become attracted to surfaces in the distribution system for example to the walls of pipelines, vessels and the like, when compositions comprising such bio-components are transported through the distribution system. Thus, there is a risk that diesel or other fuel compositions comprising bio-components such as fatty acid alkyl esters, may leave trace amounts of such bio-components in the distribution system (for example, on surfaces) which may subsequently contaminate liquid hydrocarbon fuel compositions (for example, jet fuel compositions) subsequently transported through the system. The presence of more than trace amounts of such components in liquid hydrocarbon fuel compositions (for example, jet fuel compositions) may not be permitted or may be undesirable. This may be a problem for example, when jet fuel compositions and diesel fuel compositions are interfaced in the same distribution system.

*"Reduction of Trace Bio-components in Jet"* by S. D. Anderson et al, presented at the IASH 2009 11^{th} International Conference on Stability, Handling and Use of Liquid Fuels Prague, 18-22 October 2009 relates to potential points within the distribution network where bio-components might enter jet and discusses methods to mitigate such risks.

International patent application PCT/GB2009/001546 relates to a method for the purification of a middle distillate fuel composition, contaminated with at least one fatty acid alkyl ester which process comprises contacting the middle distillate fuel composition with a silica adsorbent to adsorb at least a portion of the fatty acid alkyl ester on the silica adsorbent and thereby to reduce the total concentration of fatty acid alkyl esters in the middle distillate fuel composition.

There is a need for a method of regenerating a solid adsorbent having at least one fatty acid alkyl ester adsorbed thereon.

Thus, according to the present invention there is provided a method of regenerating a solid adsorbent capable of adsorbing at least one fatty acid alkyl ester from a liquid hydrocarbon fuel composition which method comprises regenerating said adsorbent having at least one fatty acid alkyl ester adsorbed thereon by displacing at least a portion of said adsorbed fatty acid alkyl ester from said adsorbent by contacting said adsorbent with a liquid desorbant comprising at least one aromatic hydrocarbon and/or comprising at least one polar organic compound.

Also, according to the present invention there is provided a method of regenerating a solid adsorbent capable of adsorbing at least one fatty acid alkyl ester from a liquid hydrocarbon fuel composition which comprises:
A. contacting a liquid hydrocarbon fuel composition contaminated with at least one fatty acid methyl ester with a silica adsorbent to adsorb at least a portion of the fatty acid alkyl ester on the silica adsorbent and reduce the total concentration of fatty acid alkyl esters in the liquid hydrocarbon fuel composition and
B. regenerating said adsorbent having at least one fatty acid alkyl ester adsorbed thereon by displacing at least a portion of said adsorbed fatty acid alkyl ester from said adsorbent by contacting said adsorbent with a liquid desorbant comprising at least one aromatic hydrocarbon and/or comprising at least one polar organic compound.

The present invention solves the technical problem identified above by the use of a desorbant comprising at least one aromatic hydrocarbon and/or comprising at least one polar organic compound to displace at least a portion of the adsorbed fatty acid alkyl ester from the adsorbent.

After regeneration according to the method of the present invention, the solid adsorbent may be used to adsorb at least one fatty acid alkyl ester from a liquid hydrocarbon fuel composition.

Suitably, the solid adsorbent capable of adsorbing fatty acid alkyl ester from a liquid hydrocarbon fuel composition is a silica adsorbent. Suitably, the silica adsorbent may comprise one or more high surface area silicas, for example, silicas each having a surface area of greater than 400m²/g. The silica adsorbent may comprise one or more acid washed silicas. Preferably, the silica adsorbent comprises one or more acid washed, high surface area silicas, for example, one or more acid washed, high surface area silicas each having a surface area of greater than 400m²/g.

The silica adsorbent may comprise silica having granule diameters in the range 0.05 to 5.0mm, preferably 0.1 to 1.0mm. The silica may have granule diameters of less than or equal to 0.5 mm, for example, 0.2 to 0.5mm.

The silica adsorbent may be supported.

The silica adsorbent may be contained within one or more bags or cartridges within a suitable vessel. Liquid hydrocarbon fuel composition and/or liquid desorbant may be arranged to enter the centre of the one or more cartridges or bags and exit through the external surface(s) thereof. Advantageously, liquid hydrocarbon fuel composition and/or liquid desorbant may be arranged to enter through the external surface(s) and exit through the centre of the one or more bags or cartridges, which may keep the adsorbent under compression.

The desorbant may comprise at least one aromatic hydrocarbon selected from the group consisting of benzene, toluene, xylenes and mixtures thereof. Suitable sources of such aromatic hydrocarbons include for example, liquid hydrocarbon fuel compositions and components thereof, including for example, liquid hydrocarbon refinery component compositions. Suitable sources of such aromatic hydrocarbons also include for example, refinery liquid hydrocarbon components used in the manufacture of chemical and solvent compositions.

Suitably, the desorbant may be a fuel or chemical composition in which fatty acid alkyl ester is an acceptable component or contaminant. After it has been used to displace fatty acid alkyl ester from the adsorbent, such a desorbant comprising displaced fatty acid alkyl ester, may be usefully employed for example as a fuel composition and/or a component for a fuel composition.

Thus, a liquid hydrocarbon fuel composition desorbant may be selected from the group consisting of automotive gasoline, heating kerosine, and diesel fuel. Suitably, the automotive gasoline and diesel fuel desorbants may not comprise additive components or additive packages such as might be present in finished automotive gasoline or finished diesel fuel compositions. Thus, the automotive gasoline and diesel fuel desorbants may be the fungible materials optionally comprising refinery additives, prior to the addition of additive components or additive packages which might be added at an oil or fuel terminal prior to distribution.

Thus, also, liquid refinery component composition desorbants may be, or may comprise, a member selected from the group consisting of refinery component compositions comprising benzene, toluene and xylenes (sometimes referred to as BTX), reformate, aromatics refinery process streams, toluene (purified and crude) and mixtures thereof. Such compositions may also comprise other components usually found in refinery process streams.

Suitably, the desorbant may comprise at least one polar organic compound which may be selected from the group consisting of alcohols, ethers, ketones and mixtures thereof. Suitable alcohols are methanol and ethanol. Suitable ketones include acetone. Suitable ethers include for example, methyl tertiary butyl ether, tertiary amyl methyl ether, ethyl tertiary butyl ether and mixtures thereof.

Suitably, the desorbant may comprise less than 100 ppm by weight fatty acid alkyl ester, if present.

Suitably, the liquid desorbant may be contacted with the adsorbent by passing the desorbant through a bed of the adsorbent at a liquid hourly space velocity of less than 50 bed volumes per hour, for example less than 10 bed volumes per hour. The use of such a slow rate of passing the desorbant through the bed of adsorbent may beneficially reduce the amount of desorbant used to achieve the required regeneration. Suitably, the liquid desorbant may be contacted with the adsorbent by passing less than 10 bed volumes of desorbant through a bed of the adsorbent, for example at a liquid hourly space velocity of less than 10 bed volumes per hour.

The method of the present invention may be suitably performed at or near ambient temperature. The method of the present invention may be suitably performed at or near atmospheric pressure or at a pressure of 1 bar gauge to 50 bar gauge, for example about 3 bar gauge. Such a pressure may be measured for example, at the inlet to a bed of adsorbent being contacted with desorbant.

The desorbant may be removed from the adsorbent by subjecting the adsorbent with desorbant thereon to an elevated temperature in the range of 40° to 120°C, preferably in the range of 40° to 100°C and/or contacting the adsorbent with a stream of gas. Suitable gases include air, nitrogen, carbon dioxide and mixtures thereof.

In the present invention, each fatty acid alkyl ester may be a methyl, ethyl, propyl and/or butyl ester. Usually, the fatty acid alkyl ester is a fatty acid methyl ester. The fatty acid alkyl ester may have 8 to 25 carbon atoms, preferably, 12 to 25 carbon atoms, more preferably 16 to 18 carbon atoms. The fatty acid may be saturated or unsaturated. Preferably, the fatty acid alkyl ester is acyclic. The fatty acid alkyl esters may be prepared by esterification of one or more fatty acids. The fatty acid alkyl esters may be made by transesterification of one or more triglycerides of fatty acids. The triglycerides may be obtained from vegetable oils, for example, castor oil, soyabean oil, cottonseed oil, sunflower oil, rapeseed oil (which is sometime called canola oil), Jatropha oil or palm oil, or obtained from tallow (for example sheep and/or beef tallow), fish oil or used cooking oil. The fatty acid alkyl ester may be rapeseed oil methyl ester (RME), soya methyl ester or combinations thereof.

When the present invention comprises a step of contacting a liquid hydrocarbon fuel composition contaminated with at least one fatty acid methyl ester with a silica adsorbent to adsorb at least a portion of the fatty acid alkyl ester on the silica adsorbent, the total concentration of fatty acid alkyl esters in the liquid hydrocarbon fuel composition may be reduced to less than 100 parts per million (ppm) by weight, preferably to less than 5 ppm by weight.

The liquid hydrocarbon fuel composition (for example, jet fuel composition) may comprise hydrocarbons derived from at least one of crude oil, shale oil, tar sands, Fischer Tropsch synthetic kerosine, severely hydrotreated vegetable oils, (for example, rape seed, palm oil, jatropha oil and/or coconut oil) and mixtures thereof. The liquid hydrocarbon fuel composition (for example, jet fuel composition) may be made by processes known in the art. The liquid hydrocarbon fuel composition (for example, jet fuel composition) may be made by processes comprising one or more refining processes, for example distillation of crude oil, hydrotreating, desulphurisation, cracking, fluid catalytic cracking and/or hydro cracking.

Suitably, the liquid hydrocarbon fuel composition may have a density, measured at a temperature of 15 °C, of 750 kg/m³ to 920 kg/m³, for example 750 kg/m³ to 880 kg/m³, 750 kg/m³ to 840 kg/m³, 775 kg/m³ to 880 kg/m³, or 770 kg/m³ to 840 kg/m³.

Suitably, the liquid hydrocarbon fuel composition may have an atmospheric boiling point of 130 to 400 °C. The boiling point may be measured according to ASTM D86-09 or ASTM D2887-08. When the liquid hydrocarbon fuel composition is jet fuel it may have an atmospheric boiling point (for example, as measured according to ASTM D 86 - 09) of 130 to 300 °C.

The liquid hydrocarbon fuel composition may be a turbine fuel. The liquid hydrocarbon fuel composition may be a marine fuel, for example intended to meet ISO 8217.

Preferably, the liquid hydrocarbon fuel composition is a jet fuel composition. The jet fuel composition may meet one or more of the following specifications: Jet-A, Jet-Al, Jet-B, TS-1, RT, AVCAT, AVTAG, or NATO grade F-34, F-35, F-37, F-40, F44 or F-76 or US grade JP-4, JP-5, JP-7 JP-8, JP-8 + 100 or JP-TS.

When the present invention includes a step A of contacting a liquid hydrocarbon fuel composition contaminated with at least one fatty acid methyl ester with a silica adsorbent to adsorb at least a portion of the fatty acid alkyl ester on the silica adsorbent, and the liquid hydrocarbon fuel composition is a jet fuel composition, the method may further comprise adding one or more jet fuel additives to the jet fuel composition after it has been contacted with the silica adsorbent. Suitable additives which may be added include anti-oxidant additives (for example hindered phenols), anti static additives, fuel system icing inhibitors (for example, diethylene glycol monomethyl ether), corrosion inhibitor/lubricity additives (for example, fatty acids/dimer acids with carbon chain length of up to 36 carbon atoms) and metal deactivators (i.e. N,N-disalicylidene 1,2-propanediamine). Anti-oxidant additives may typically be added at up to a maximum treat rate of 24 mg/l. Anti-static additives my typically be added at up to a maximum treat rate of 5 mg/l. Fuel system icing inhibitors may typically be added at up to a maximum treat rate of 0.15 % by volume. Corrosion inhibitor/lubricity additives may typically be added at up to a maximum treat rate of 23 mg/l. Metal deactivators may typically be added at up to a maximum treat rate of 5.7 mg/l.

In the embodiments of the present invention comprising a step A, of contacting a liquid hydrocarbon fuel composition contaminated with at least one fatty acid methyl ester with a silica adsorbent to adsorb at least a portion of the fatty acid alkyl ester on the silica adsorbent, the liquid hydrocarbon fuel composition contaminated with at least one fatty acid alkyl ester may be contacted with one or more further adsorbents other than silica adsorbents. For example, in one embodiment one or more silica adsorbents and one or more further adsorbents may be used in series. For example, the liquid hydrocarbon fuel composition (for example, jet fuel composition) may be contacted with one or more silica adsorbents to adsorb a large proportion of the fatty acid alkyl ester from the liquid hydrocarbon fuel composition and then contacted with one or more further adsorbents to adsorb some or all of the remaining fatty acid alkyl ester from the liquid hydrocarbon fuel composition and/or to adsorb other contaminants, for example surface active components, from the liquid hydrocarbon fuel composition. In this embodiment, the further adsorbents may be or comprise one or more clays.

Alternatively, or additionally, the liquid hydrocarbon fuel composition (for example jet fuel composition) contaminated with at least one fatty acid alkyl ester may be contacted with one or more further adsorbents upstream of one or more silica adsorbents to remove contaminants other than fatty acid alkyl esters present in the liquid hydrocarbon fuel composition for example, contaminants which may be detrimental to the performance of the silica adsorbent in removing fatty acid alkyl ester. In this embodiment, the one or more further adsorbents may be or comprise for example, one or more super adsorbent polymers, e.g. sodium polyacrylate.

Advantageously, water may be removed from the liquid hydrocarbon fuel composition (for example, jet fuel composition) contaminated with at least one fatty acid alkyl ester by contacting the liquid hydrocarbon fuel composition with one or more super adsorbent polymers and/or one or more water coalescers, upstream of one or more silica adsorbents, which may protect the silica adsorbents from water contamination and consequent deactivation.

One or more silica adsorbents may be used in combination with one or more further adsorbents other than silica adsorbents. In a preferred embodiment, one or more silica adsorbents may be used in series with at least two further adsorbents. For example, the liquid hydrocarbon fuel composition (for example, jet fuel composition) contaminated with at least one fatty acid methyl ester may be contacted with more or more super adsorbent polymers and/or one or more water coalescers, then contacted with one or more silica adsorbents, and then contacted with one or more clay adsorbents. The liquid hydrocarbon fuel composition (for example jet fuel composition) may be passed through one or more microfilters after treatment with one or more silica adsorbents and option further adsorbent(s). These microfilters may remove insoluble materials from the fuel composition.

The liquid hydrocarbon fuel composition (for example, jet fuel composition) contaminated with at least one fatty acid alkyl ester may be contacted with the silica adsorbents by passing it through one or more beds of silica adsorbent. The one or more beds of silica adsorbent may be packed beds of silica. Suitable beds of silica adsorbent may have a length to diameter ratio to provide plug flow of the contaminated liquid hydrocarbon fuel composition (for example, jet fuel composition) through the bed. A suitable ratio to provide plug flow is at least 2:1. A ratio of about 1:8 to about 2:1 may be used. The liquid hydrocarbon fuel composition (for example, jet fuel composition) contaminated with at least one fatty acid alkyl ester may be contacted with the silica adsorbent by passing it through a bed of silica adsorbent at a high liquid hourly space velocity of about 50 to about 190, preferably about 100 to about 140, for example about 120. Alternatively, in some applications, capacity of the silica adsorbents may be increased by passing the liquid hydrocarbon fuel composition through the one or more silica adsorbents at a low liquid hourly space velocity of about 0.5 to about 20, or about 20 to about 50.

Suitably, in the embodiments of the present invention comprising a step A in which the liquid hydrocarbon fuel composition contaminated with at least one fatty acid methyl ester is contacted with the silica adsorbent by passing the liquid hydrocarbon fuel composition through a bed of the silica adsorbent, in step B the liquid desorbant may be contacted with the adsorbent by passing the desorbant through the bed of the adsorbent at a flow rate which is less than that used in step A.

As indicated above, suitably, in the present invention, the liquid desorbant may be contacted with the adsorbent by passing the desorbant through a bed of the adsorbent at a liquid hourly space velocity of less than 50 bed volumes per hour, for example, less than 10 bed volumes per hour, which may be a flow rate which is less than that used in step A. The use of such a slow rate of passing the desorbant through the bed of adsorbent may beneficially reduce the amount of desorbant used to achieve the required regeneration. As indicated above, suitably in the present invention, the liquid desorbant may be contacted with the adsorbent by passing less than 10 bed volumes of desorbant through a bed of the adsorbent, for example at a liquid hourly space velocity of less than 10 bed volumes per hour, which may be a flow rate which is less than that used in step A.

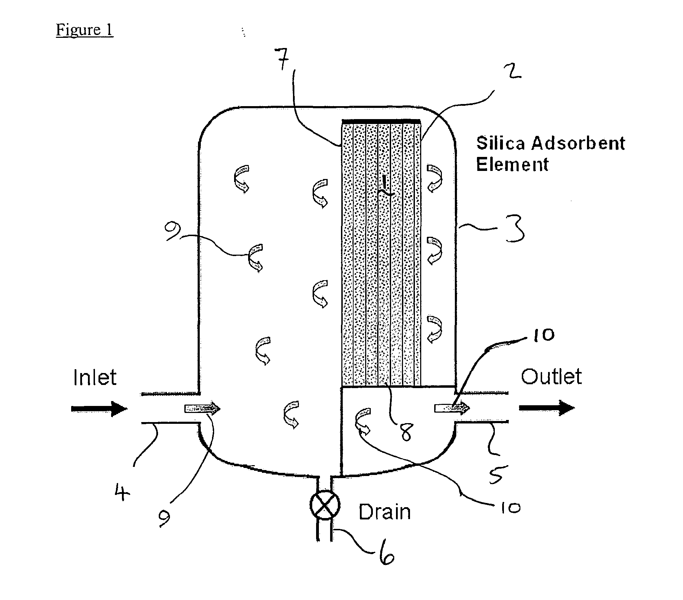

The invention will now be illustrated by way of example only with reference to the following examples and experiment and with reference to Figure 1 which represents in schematic cross section a bed of silica adsorbent for use in the present invention.

A bed of silica adsorbent was prepared by dry packing industrial grade silica gel supplied by Aldrich (0.95g) of 0.2 - 0.5 mm grain size (35 - 70 mesh, ASTM), activity according to Brockmann and Schodder 2-3 into a stainless steel HPLC column (5 cm x 0.7 cm ID) which was positioned vertically in an oven. The inlet of the column was connected to the outlet of a HPLC pump and the outlet of the column was connected to a back pressure regulator set at 60 psi. The bed of silica adsorbent and connecting lines were purged with nitrogen to remove air. The HPLC pump was primed with jet fuel, Grade Jet-A1 meeting Defence Standard 91-91 Issue 6, containing 100ppm fatty acid methyl ester (FAME) consisting of an equal mixture by volume of rapeseed, palm, soy and tallow methyl esters, and set to a flow rate of 0.19 ml/min corresponding to a Liquid Hourly Space Velocity (LHSV) of 6 bed volumes per hour. The column oven temperature was maintained at 25°C.

### Example 1.

### Step A.

The jet fuel containing FAME was pumped through the bed of silica adsorbent at 25°C and at a liquid hourly space velocity of 6 bed volumes per hour until approximately 50 g (65ml) of jet fuel containing FAME (100ppm by weight corresponding to a nominal 120 mg/l) had passed through the bed. Aliquots (about 1 g) of treated jet fuel were collected from the outlet of the bed and analysed by HPLC-ELSD for the FAME content. The analyses of the aliquots of treated jet fuel and of the bulked treated jet fuel are shown in Table 1 below.

**Table 1**

| Aliquot | Cumulative amount of FAME-contaminated jet fuel treated (g) | Ratio of cumulative amount of treated FAME-contaminated jet fuel / adsorbent (g/g) | FAME content in treated jet fuel aliquot (g/ml) |
|---|---|---|---|
| 1 | 2.38 | 2.5 | 0 |
| 2 | 12.07 | 12.7 | 0 |
| 3 | 22.15 | 23.3 | 11 |
| 4 | 30.57 | 32.2 | 41 |
| 5 | 39.88 | 42.0 | 64 |
| 6 | 49.82 | 52.4 | 83 |
| | | | |
| Bulked treated jet fuel | | | 28.4 |

### Step B

The feed of FAME-contaminated jet fuel was replaced by a fed of toluene desorbant at a flow rate of 0.19 ml/min corresponding to a Liquid Hourly Space Velocity (LHSV) of 6 bed volumes per hour for 1 hour during which about 12 ml (corresponding to about 3 bed volumes) of toluene desorbant had been contacted with the bed of silica adsorbent. The effluent was collected and analysed for its FAME content by HPLC-ELSD.

The toluene desorbant displaced FAME from the silica adsorbent and the amount of FAME in the collected toluene desorbant was 3.12 mg.

The toluene desorbant was then removed from the bed of regenerated silica adsorbent by passing a stream of nitrogen gas through the bed for approximately 10 hours with an elevated bed/oven temperature of 50°C.

The bed/oven temperature was then returned to 25°C and the adsorption Step A repeated in Example 2 below.

The results for the adsorption step, Step A, in Example 1 are comparable to previously-obtained results.

The calculated mass balance for fatty acid methyl ester in Example 1 shows:
Amount of FAME in contaminated jet fuel feed = 4.98 mg (assuming 100mg/kg)
Amount of FAME in bulked product + aliquots = 1.16 mg
Amount of FAME in recovered toluene desorbant = 3.12 mg

Approximately 0.7 mg FAME (15%) is unaccounted for and about half of this (0.35 mg, 7%) is linolenic acid methyl ester which was not recovered from the adsorbent (linolenic acid is a 18:3 fatty acid). It appears from the analysis that 0.2 mg of the unrecovered FAME was linoleic acid methyl ester (linoleic acid is a 18:2 fatty acid). It is believed that a longer desorption step may have displaced more of this ester.

### Example 2.

### Step A

The bed of regenerated silica adsorbent after treatment in Example 1 was used to treat further amounts of jet fuel in the same way as in Example 1. Analyses of the aliquots of treated jet fuel are given in Table 2 below.

**Table 2**

| Aliquot | Cumulative amount of FAME-contaminated jet fuel treated (g) | Ratio of cumulative amount of treated FAME-contaminated jet fuel / adsorbent (g/g) | FAME content in treated jet fuel aliquot (g/ml) |
|---|---|---|---|
| 1 | 3.12 | 3.3 | 0 |
| 2 | 13.43 | 14.1 | 0 |
| 3 | 23.58 | 24.8 | 1 |
| 4 | 31.42 | 33.1 | 8 |
| 5 | 40.30 | 42.4 | 25 |
| 6 | 49.10 | 51.7 | 40 |
| | | | |
| Bulked treated jet fuel | | | 7.2 |

### Step B

The feed of FAME-contaminated jet fuel was replaced by a fed of acetone desorbant at a flow rate of 0.5 ml/min corresponding to a Liquid Hourly Space Velocity (LHSV) of 15 bed volumes per hour for 30 minutes during which about 15 ml (corresponding to about 4 bed volumes) of acetone desorbant had been contacted with the bed of silica adsorbent. The effluent was collected and analysed for its FAME content by HPLC-ELSD.

The acetone desorbant displaced FAME from the silica adsorbent and amount of FAME in the collected acetone desorbant was 4.49 mg.

The acetone desorbant was then removed from the bed of regenerated silica adsorbent by passing a stream of nitrogen gas through the bed for approximately 2 hours with an elevated bed/oven temperature of 120°C.

The bed/oven temperature was then returned to 25°C and the adsorption Step A repeated in Experiment 3 below.

The data from the adsorption step, Step A, in Example 2 shows a similar adsorption profile to that in Step A of Example 1 but the silica adsorbent after the regeneration of Example 1 appears to exhibit a higher activity (+3%) and a higher capacity (+50%) than the un-regenerated silica in Step A of Example 1.

The higher activity is shown by the higher cumulative feed/adsorbent ratio at the breakthrough point.

The mass balance for Example 2 is show as:
Amount of FAME in contaminated jet fuel feed = 4.91 mg (assuming 100mg/kg)
Amount of FAME in bulked product + aliquots = 0.30 mg
Amount of FAME in recovered acetone desorbant = 4.49 mg

Approximately 0.12 mg FAME (2.5%) is unaccounted for. Linolenic acid methyl ester (about 0.34 mg total in the feed used in Example 2) was not recovered in the treated jet fuel or acetone desorbant which implies that the acetone desorbant displaced some FAME (predominantly linoleic acid methyl ester) left on the silica from Example 1.

Using the toluene and acetone desorbants, the overall recovery of FAME from Examples 1 and 2 was about 92% (i.e. present in the treated jet fuel and desorbants) with a further 7 % (i.e. linolenic acid methyl ester) non-recoverable/undetected.

### Experiment 3.

### Step A.

This is not an example according to the present invention because the adsorbent was not regenerated. It illustrates the removal of fatty acid methyl ester with a silica adsorbent after the adsorbent has been regenerated in the preceding Examples.

The bed of adsorbent after treatment in Example 2 was used to treat further amounts of jet fuel in the same way as in Examples 1 and 2. Analyses of the aliquots of treated jet fuel are given in Table 3 below.

**Table 3**

| Aliquot | Cumulative amount of FAME-contaminated jet fuel treated (g) | Ratio of cumulative amount of treated FAME-contaminated jet fuel / adsorbent (g/g) | FAME content in treated jet fuel aliquot (g/ml) |
|---|---|---|---|
| 1 | 3.57 | 3.8 | 0 |
| 2 | 16.31 | 17.2 | 0 |
| 3 | 26.12 | 27.5 | 0 |
| 4 | 37.06 | 39.0 | 12 |
| 5 | 47.51 | 50.0 | 60 |
| 6 | 53.79 | 56.6 | 103 |

The silica adsorbent exhibits a slightly higher activity (higher cumulative feed/adsorbent ratio at the breakthrough point) than in the previous adsorption steps but a comparable capacity than in the previous examples.

Figure 1 represents in schematic cross section a bed of silica adsorbent which may be used in the present invention. Thus, silica adsorbent (1) is contained in a cartridge (2) positioned within a vessel (3) having an inlet (4), an outlet (5) and a drain point (6).

In use, liquid hydrocarbon fuel composition contaminated with at least one fatty acid methyl ester may be passed into the vessel (3) through the inlet (4). The contaminated liquid hydrocarbon may pass through the external surface (7) of the cartridge (2) and contact the silica adsorbent (1) which adsorbs at least a portion of the fatty acid alkyl ester on the silica adsorbent and reduces the total concentration of fatty acid alkyl esters in the liquid hydrocarbon fuel composition which flows out of the cartridge through its centre (8) and thence out of the vessel (3) through the outlet (5).

When it is desired to regenerate the silica adsorbent, the flow of contaminated hydrocarbon is stopped. Fatty acid alkyl ester adsorbed on the silica adsorbent (1) is displaced from the silica adsorbent by passing a liquid desorbant comprising at least one aromatic hydrocarbon and/or comprising at least one polar organic compound (9) into the vessel (3) through the inlet (4) and thence through the external surface (7) of the cartridge (2) to contact the silica (1). Liquid desorbant with the displaced fatty acid alkyl ester (10) is passed out of the cartridge (2) through its centre (8) and thence out of the vessel (3) through the outlet (5).

The flow of desorbant may then be stopped and liquid desorbant may be removed from the bed, if desired, by subjecting the adsorbent with desorbant thereon to an elevated temperature in the range of 40 to 120°C and/or contacting the adsorbent with a stream of gas which gas may be passed into the vessel through inlet (4) and out of the vessel through outlet (5).

After regeneration according to the method of the present invention, the solid adsorbent may be used to adsorb at least one fatty acid alkyl ester from a liquid hydrocarbon fuel composition.

After it has been used to displace fatty acid alkyl ester from the adsorbent, the desorbant comprising displaced fatty acid alkyl ester, may be usefully employed for example as a fuel composition and/or a component for a fuel composition.

## Claims

1. A method of regenerating a solid adsorbent capable of adsorbing at least one fatty acid alkyl ester from a liquid hydrocarbon fuel composition which method comprises regenerating said adsorbent having at least one fatty acid alkyl ester adsorbed thereon by displacing at least a portion of said adsorbed fatty acid alkyl ester from said adsorbent by contacting said adsorbent with a liquid desorbant comprising at least one aromatic hydrocarbon and/or comprising at least one polar organic compound.

2. A method as claimed in claim 1 in which the adsorbent comprises silica.

3. A method as claimed in claim 2 in which the silica adsorbent comprises one or more high surface area silicas.

4. A method as claimed in any one of the preceding claims in which the desorbant comprises at least one aromatic hydrocarbon selected from the group consisting of benzene, toluene, xylenes and mixtures thereof.

5. A method as claimed in claim 4 in which the desorbant comprising at least one aromatic hydrocarbon is selected from the group consisting of liquid hydrocarbon fuel compositions and liquid hydrocarbon refinery component compositions.

6. A method as claimed in claim 5 in which the liquid hydrocarbon fuel composition desorbant is selected from the group consisting of automotive gasoline, heating kerosine and diesel fuel.

7. A method as claimed in claim 5 in which the liquid hydrocarbon refinery component composition desorbant is, or comprises, a member selected from the group consisting of:
refinery component compositions comprising benzene, toluene and xylenes;
reformate;
aromatics refinery process streams;
toluene; and
mixtures thereof.

8. A method as claimed in any one of the preceding claims in which the desorbant comprises at least one polar organic compound which is selected from the group consisting of alcohols, ethers, ketones and mixtures thereof.

9. A method as claimed in any one of the preceding claims which comprises:
A. contacting a liquid hydrocarbon fuel composition contaminated with at least one fatty acid methyl ester with a silica adsorbent to adsorb at least a portion of the fatty acid alkyl ester on the silica adsorbent and reduce the total concentration of fatty acid alkyl esters in the liquid hydrocarbon fuel composition and
B. regenerating said adsorbent having at least one fatty acid alkyl ester adsorbed thereon by displacing at least a portion of said adsorbed fatty acid alkyl ester from said adsorbent by contacting said adsorbent with a liquid desorbant comprising at least one aromatic hydrocarbon and/or comprising at least one polar organic compound.

10. A method as claimed in claim 9 in which the liquid hydrocarbon fuel composition is a jet fuel composition.

11. A method as claimed in claim 9 or claim 10 in which in step A the total concentration of fatty acid alkyl esters in the liquid hydrocarbon fuel composition is reduced to less 100 parts per million by weight, preferably to less than 5 parts per million by weight.

12. A method as claimed in any one of claims 9 to 11 in which:
in Step A the liquid hydrocarbon fuel composition contaminated with at least one fatty acid methyl ester is contacted with the silica adsorbent by passing the liquid hydrocarbon fuel composition through a bed of the silica adsorbent, and
in Step B the liquid desorbant is contacted with the adsorbent by passing the desorbant through the bed of the adsorbent at a flow rate which is less than that used in step A.

13. A method as claimed in any one of the preceding claims in which the liquid desorbant is contacted with the adsorbent by passing the desorbant through a bed of the adsorbent at a liquid hourly space velocity of less than 50 bed volumes per hour.

14. A method as claimed in any one of the preceding claims in which the liquid desorbant is contacted with the adsorbent by passing less than 10 bed volumes of desorbant through a bed of the adsorbent.

15. A method as claimed in any one of the preceding claims which, after displacement of at least a portion of said adsorbed fatty acid alky ester from said adsorbent, further comprises removing desorbant from the adsorbent by subjecting the adsorbent with desorbant thereon to an elevated temperature in the range of 40 to 120°C and/or contacting the adsorbent with a stream of gas.
